# EUROPEAN PATENT SPECIFICATION

(11) **EP 3 840 006 B1**
(45) Date of publication and mention of the grant of the patent: **10.04.2024**
(21) Application number: 20214274.1
(22) Date of filing: 15.12.2020
(51) Int. Cl.: H01H 39/00, H01H 85/00, H01H 85/048, H01H 85/46

(54) **ACTIVE AND PASSIVE FUSE MODULE**
AKTIVES UND PASSIVES SICHERUNGSMODUL
MODULE DE FUSIBLE ACTIF ET PASSIF

(30) Priority: 16.12.2019 US 201962948728 P; 09.06.2020 US 202063036613 P; 15.09.2020 US 202017021774
(43) Date of publication of application: 23.06.2021
(73) Proprietor: Littelfuse, Inc., Chicago, IL 60631 (US)
(72) Inventor: Schlaak, Michael, Chicago, IL 60631 (US); Hetzmannseder, Engelbert, Chicago, IL 60631 (US); Lasini, Derek, Chicago, IL 60631 (US)
(74) Representative: Arnold & Siedsma

(56) References cited:
- DE-A1- 10 049 071
- DE-U1-202015 106 793
- FR-A1- 3 014 594
- FR-A1- 3 073 664
- US-A- 5 990 572
- US-A1- 2016 189 897

## Description

### Field of the Disclosure

This disclosure relates generally to the field of circuit protection devices and relates more particularly to a fuse module that includes both passive and active circuit protection elements.

### Background of the Disclosure

Fuses are commonly implemented in electrical systems for providing overcurrent protection. Most fuses are "passive" devices that include fuse elements that are configured to carry a rated amount of electrical current during normal operation. If current flowing through a fuse element exceeds the fuse element's rated current, the fuse element will melt, disintegrate, or otherwise separate, thereby arresting the current to prevent or mitigate damage to connected electrical components.

In some cases, it may be desirable to "actively" create a physical opening in an electrical circuit regardless of an amount of electrical current flowing through the circuit. For example, if an automobile is involved in a collision, it may be desirable to physically open an electrical circuit in the automobile to ensure that connected electrical components are deenergized to mitigate the risk of fire and/or electrocution in the aftermath of the collision. To that end, so-called pyrotechnic interrupters (PIs) have been developed which can be selectively actuated upon the occurrence of specified events to interrupt the flow of current in a circuit. For example, in the case of an automobile collision, a controller (e.g., an airbag control unit, battery management system, etc.) may send an initiation signal to a PI, causing a pyrotechnic ignitor within the PI to be detonated. A resultant increase in pressure within the PI rapidly forces a piston or blade to cut through a conductor that extends through the PI. Electrical current flowing through the PI is thereby interrupted, and the piston, which is formed of a dielectric material, provides an electrically insulating barrier between separated portions of the conductor to prevent electrical arcing therebetween.

In certain applications it may be desirable to implement both passive and active circuit protection elements. It may further be desirable to implement such elements in a compact, space-saving form factor that facilitates convenient installation.

It is with respect to these and other considerations that the present improvements may be useful.

The abstract of FR3073664A1 states: 'A pyrotechnic switching device comprising a first and a second pyrotechnic initiators, and a body in which are present: an electrically conductive portion, and a mobile switching element having an insulating relief facing the conductive portion. The device also comprises a fuse element connected in series with the conductive portion, the first initiator being connected to the terminals of the fuse element so that tripping the fuse element actuates the first initiator, each initiator being configured to cause the device to switch from a current conducting configuration to a current interrupting configuration, the mobile switching element being set in motion toward the conductive portion in order to break it by the impact of the relief during switching from the first to the second configuration. '

### Summary

This Summary is provided to introduce a selection of concepts in a simplified form further described below in the Detailed Description. This Summary is not intended to identify key features or essential features of the claimed subject matter, nor is the summary intended as an aid in determining the scope of the claimed subject matter.

A fuse module according to the invention is defined in independent claim 1. Further embodiments are described by the dependent claims.

### Brief Description of the Drawings

**FIG. 1** is a cross sectional view illustrating an embodiment of a fuse module in accordance with the present disclosure in a non-actuated state;
**FIG. 2** is a cross sectional view illustrating the fuse module shown in FIG. 1 in an actuated state;
**FIG. 3** is a cross sectional view illustrating another embodiment of a fuse module in accordance with the present disclosure;
**FIG. 4** is a cross sectional view illustrating another example of a fuse module that is not forming part of the present invention.

### Detailed Description

A fuse module in accordance with the present disclosure will now be described more fully with reference to the accompanying drawings, in which preferred embodiments of the fuse module are presented. It will be understood, however, that the fuse module may be embodied in many different forms and should not be construed as being limited to the embodiments set forth herein. Rather, these embodiments are provided so that this disclosure will convey certain exemplary aspects of the fuse module to those skilled in the art.

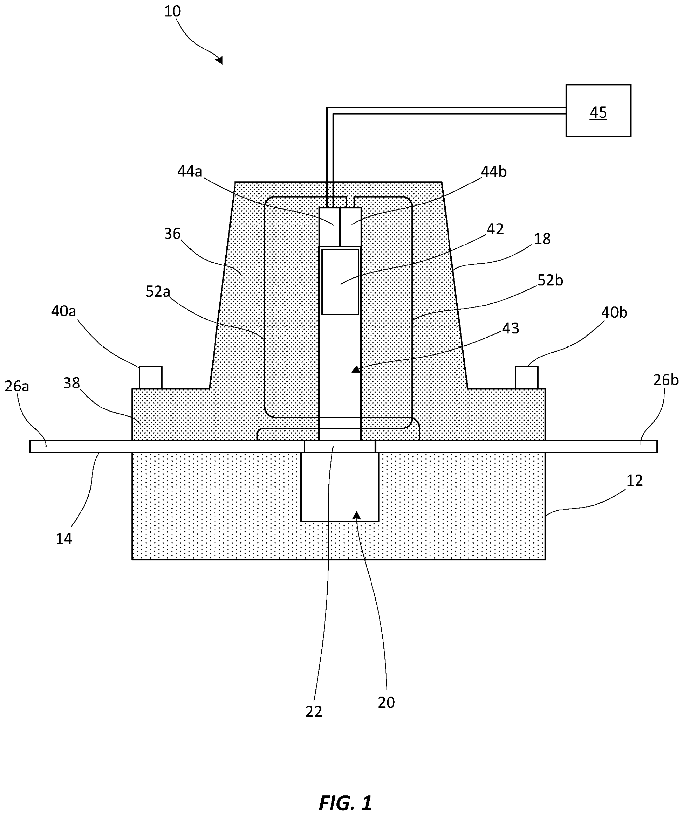

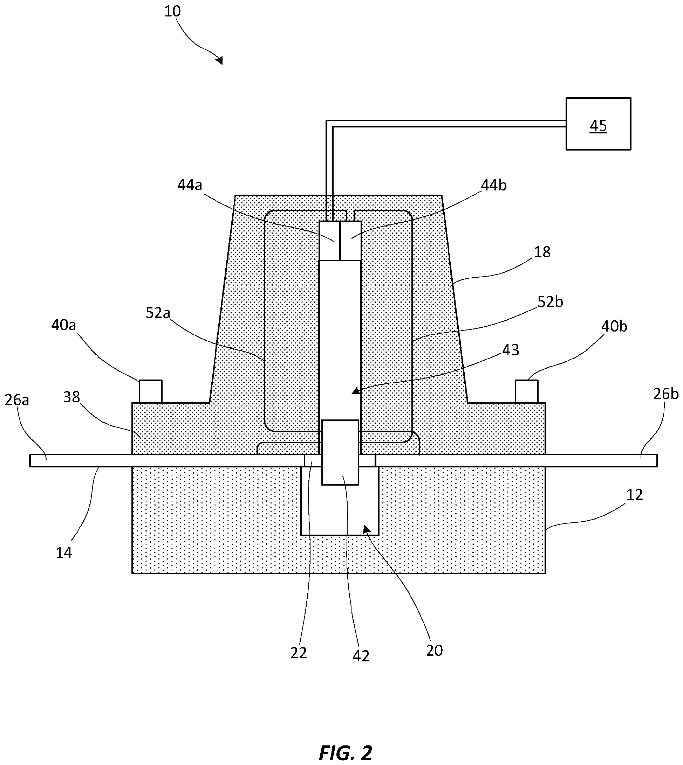

Referring to **FIGS. 1** and **2****,** cross-sectional views illustrating a fuse module 10 (hereinafter "the fuse module 10") in accordance with an exemplary, non-limiting embodiment of the present disclosure are shown. For the sake of convenience and clarity, terms such as "front," "rear," "top," "bottom," "up," "down," "vertical," and "horizontal" may be used herein to describe the relative placement and orientation of various components of the fuse module 10, each with respect to the geometry and orientation of the fuse module 10 as it appears in **FIGS. 1** and **2****.** Said terminology will include the words specifically mentioned, derivatives thereof, and words of similar import.

The fuse module 10 includes a base 12, a busbar 14, and a pyrotechnic interrupter (PI) 18. The base 12 is formed from electrically insulating material, such as plastic, polymer, ceramic, etc. The present disclosure is not limited in this regard. The base 12 includes a cavity 20 formed in a top surface thereof

The busbar 14 may be formed from a single piece or length of conductive material (e.g., stamped from a single sheet of copper or the like) and includes a fuse element 22 and first and second terminal portions 26a, 26b extending from opposite ends of the fuse element 22. The busbar 14 is disposed on the top surface of the base 12 in a horizontal orientation with the fuse element 22 extending over the cavity 20. The first and second terminal portions 26a, 26b may extend outside of, or beyond, the sides of the base 12 for facilitating connection of the fuse module 10 within a circuit.

The fuse element 22 may be configured to melt, disintegrate, or otherwise open if current flowing through the busbar 14 exceeds a predetermined threshold, or "current rating," of the fuse module 10. In various examples, the fuse element 22 may include perforations, slots, thinned or narrowed segments, and/or various other features for making the fuse element 22 more susceptible to melting or opening than other portions of the busbar 14. In a non-limiting example, the fuse element 22 may be configured to have a current rating in a range between 30 amps and 1000 amps. The present disclosure is not limited in this regard.

The PI 18 may include a housing 36 having a mounting flange 38 projecting from a lower portion thereof. The housing 36 may be disposed atop the base 12 with mechanical fasteners 40a, 40b extending through the mounting flange 38 and into the base 12 for fastening the components together in a vertically stacked relationship. The housing 36 includes a hollow, vertically oriented shaft 43 extending therethrough. The shaft 43 may have an open bottom end located directly above the fuse element 22 and the cavity 20.

The housing 36 contains a movable piston or blade 42 (hereinafter "the piston 42") disposed within a hollow shaft 43 located above the cavity 20 of the base 12. The housing 36 further contains a first pyrotechnic ignitor 44a disposed within the shaft 43 above the piston 42. The first pyrotechnic ignitor 44a may be coupled to a controller 45 (e.g., an airbag control unit, battery management system, etc. of an automobile). Upon the occurrence of a predefined event, such as an automobile collision (i.e., if the fuse module 10 is implemented in an automobile), the controller 45 may send an initiation signal to the pyrotechnic ignitor 44a, causing the pyrotechnic ignitor 44 to be detonated. A resultant increase in pressure within the shaft 43 rapidly forces the piston 42 downwardly in the shaft 43, through the fuse element 22 of the busbar 14 as shown in **FIG. 2****.** Electrical current flowing through the busbar 14 is thereby interrupted, and the piston 42, which may be formed of a dielectric material, may provide an electrically insulating barrier between the separated ends of the fuse element 22 to prevent electrical arcing therebetween.

The above-described manner in which the pyrotechnic ignitor 44b is triggered (i.e., via the controller 45 sending an initiation signal to the pyrotechnic ignitor 44b upon occurrence of a collision, etc.) may be referred to as "external triggering" of the pyrotechnic ignitor 44b. In various embodiments, the fuse module 10 may additionally or alternatively include an "arc triggering" capability, wherein a second pyrotechnic ignitor 44b is disposed within the shaft 43 adjacent the first pyrotechnic ignitor 44a. A pair of leads 52a, 52b extend from the second pyrotechnic ignitor 44b to the first and second terminal portions 26a, 26b, respectively. The leads 52a, 52b extend through/across the shaft 43 below the piston 42. When the fuse element 22 is melted (e.g., upon occurrence of an overcurrent condition), the voltage across the separated first and second terminal portions 26a, 26b creates sufficient current in the leads 52a, 52b to cause the second pyrotechnic ignitor 44b to be detonated. A resultant increase in pressure within the shaft 43 rapidly forces the piston 42 downwardly in the shaft 43, through the fuse element 22 of the busbar 14 (as described above and as shown in **FIG. 2**). Additionally, the piston 42 severs the leads 52a, 52b to eliminate any potential alternative current paths between the first and second terminal portions 26a, 26b.

The above-described configuration is not intended to be limiting, and it is contemplated that,in an example not forming part of the present invention, the leads 52a, 52b may be severed at various locations other than within the shaft 43 and by structures other than the piston 42. In a further example not forming part of the present invention, instead of extending through the shaft 43, the leads 52a, 52b may extend through the cavity 20 or elsewhere adjacent the shaft 43. In various embodiments, the leads 52a, 52b may be located outside of or away from the path of the piston 43 and, instead of being severed directly by the piston 43, may be severed by a shank or protrusion extending from the piston 43 or by an electrical/mechanical structure or device that may be triggered by movement of the piston 43.

Various additional or alternative devices, configurations, and/or arrangements for ensuring electrical isolation between the first and second terminal portions 26a, 26b after detonation of the second pyrotechnic ignitor 44b may be implemented without departing from the scope of the present disclosure.

Since the fuse element 22 begins to separate (e.g., melts) before the pyrotechnic ignitor 44b detonates and drives the piston 42, the fuse element 22 is weakened (e.g. partially melted) before the piston 42 is driven therethrough, making it easier for the piston 42 to cut through the fuse element 22. Thus, the fuse element 22 may be thicker/larger (and therefore capable of handling higher currents) than would be possible if the piston 42 were required to break through an unweakened portion of the busbar 14 (i.e., a portion of the busbar 14 other than the partially melted fuse element 22) as in conventional fuse modules incorporating pyrotechnic interrupters.

While the above-described fuse module 10 includes a first pyrotechnic ignitor 44a coupled to the controller 45 and a second pyrotechnic ignitor 44b coupled to the first and second terminal portions 26a, 26b of the busbar 14, respectively, embodiments of the present disclosure are contemplated in which the first pyrotechnic ignitor 44a and the controller 45 are omitted, and wherein the fuse module 10 includes only a single pyrotechnic ignitor connected to the busbar 14 and configured to be detonated upon separation of the fuse element 22 (as described above with respect to the second pyrotechnic ignitor 44b).

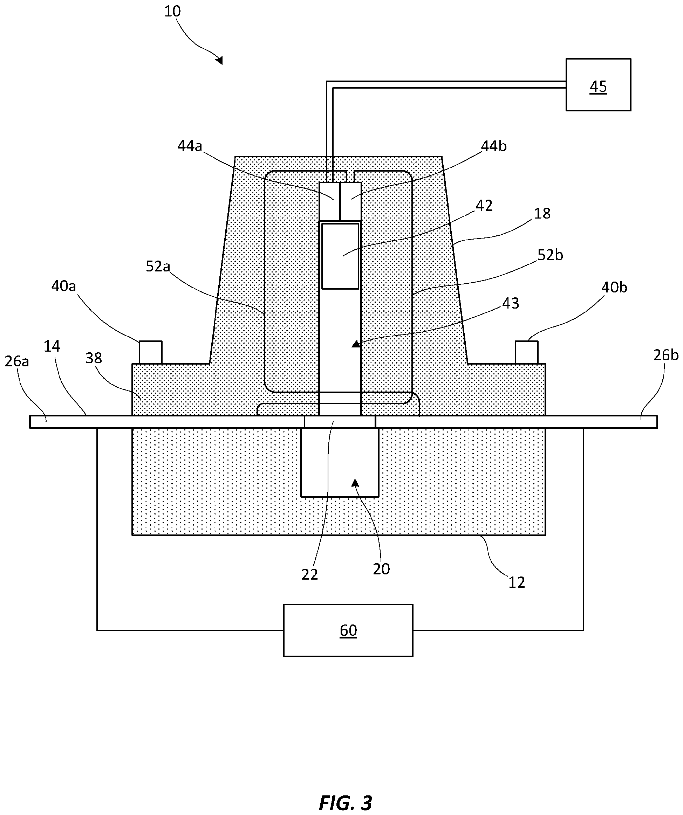

Referring to **FIG. 3****,** an embodiment of the present disclosure is contemplated in which a positive temperature coefficient (PTC) element 60 may be connected in parallel with the fuse module 10. The PTC element 60 may be formed of any type of PTC material (e.g., polymeric PTC material, ceramic PTC material, etc.) formulated to have an electrical resistance that increases as the temperature of the PTC element 60 increases. Particularly, the PTC element 60 may have a predetermined "trip temperature" above which the electrical resistance of the PTC element 60 rapidly and drastically increases (e.g., in a nonlinear fashion) in order to substantially arrest current passing therethrough. The PTC element 60 may have, within its normal operating temperature range (i.e., below its trip temperature), a resistance that is greater than a resistance of the fuse element 22.

During normal operation of the fuse module 10, current may flow through the busbar 14, between the first and second terminal portions 26a, 26b. Upon the occurrence of an overcurrent condition, wherein current flowing through the fuse module 10 exceeds the current rating of the fuse element 22, the fuse element 22 may melt or otherwise separate. The current may then be diverted to flow through the only available alternate path, i.e., through the PTC element 60. Since the current can flow through this alternate path, electrical potential is not able to accumulate between the separated ends of the melted fuse element 22, thereby precluding the formation and propagation of an electrical arc therebetween.

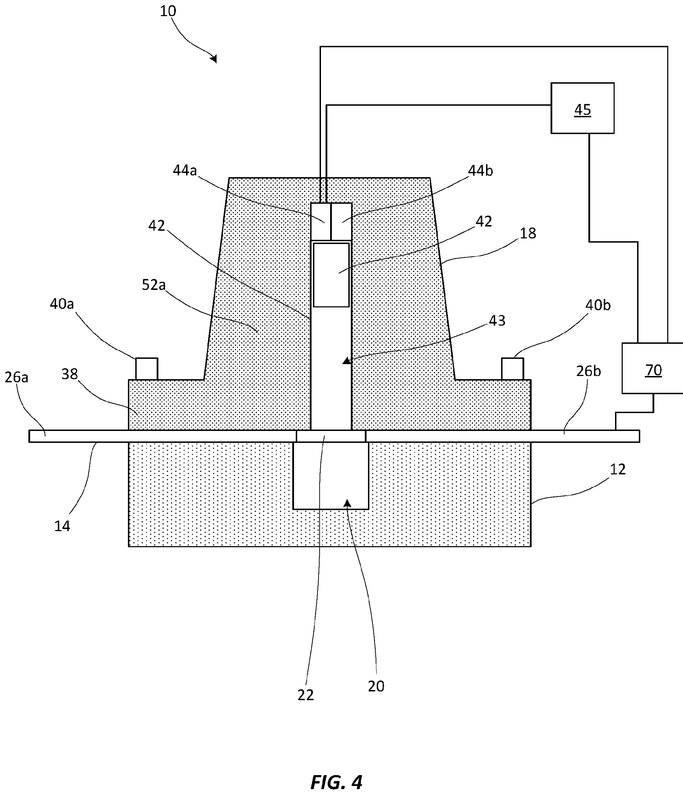

Referring to **FIG. 4****,** another example not forming part of the present invention is contemplated in which a current sensing module 70 (e.g., a current sensor with a microprocessor) may be connected to one of the terminal portions 26a, 26b of the busbar 14 and to the pyrotechnic ignitor 44a of the PI 18. The current sensing module 70 may be configured to measure a current in the busbar 14 and, upon detection of a current above a predefined threshold, may send an initiation signal to the pyrotechnic ignitor 44a, detonating the pyrotechnic ignitor 44a and breaking the fuse element 22 as described above. The current sensing module 70 may be programmed to send the initiation signal immediately or after a desired, predetermined amount of time (e.g., 10 milliseconds) and in response to detecting a desired, predetermined amount of current in the busbar 14. In various embodiments, the current sensing module 70 may also be connected to the controller 45, and the current sensing module 70 may be configured to send an initiation signal to the pyrotechnic ignitor 44a only if certain predetermined conditions are met. For example, the current sensing module 70 may be configured to send an initiation signal to the pyrotechnic ignitor 44a if the current sensing module 70 detects more than a predetermined amount of current in the busbar 14 and if the controller 45 provides an indication of a collision to the current sensing module 70.

In view of the foregoing description, it will be appreciated that the fuse modules of the present disclosure facilitate the implementation of both passive and active circuit protection elements (e.g., conventional fuse elements and a pyrotechnic interrupter) in single, compact, space-saving form factor that facilitates convenient installation for various applications.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

While the present disclosure makes reference to certain embodiments, numerous modifications, alterations and changes to the described embodiments are possible without departing from the scope of the present disclosure, as defined in the appended claim(s). Accordingly, it is intended that the present disclosure not be limited to the described embodiments, but that it has the full scope defined by the language of the following claims.

## Claims

1. A fuse module (10) comprising:
an electrically insulating base (12);
a busbar (14) disposed on a top surface of the base and comprising a fuse element (22) and first and second terminal portions (26a,26b) extending from opposite ends of the fuse element, the fuse element extending over a cavity (20) formed in the top surface of the base;
a pyrotechnic interrupter (PI) disposed atop the base, the PI comprising:
a piston (42) disposed within a shaft (43) above the fuse element:
a first pyrotechnic ignitor (44a) coupled to a controller (45), the first pyrotechnic ignitor configured to detonate and force the piston through the fuse element upon receiving an initiation signal from the controller; and
a second pyrotechnic ignitor (44b) coupled to the busbar by a pair of leads (52a,52b), the second pyrotechnic ignitor configured to detonate and force the piston through the fuse element upon an increase in voltage across the leads, wherein the leads extend through the shaft and across a path of the piston and are configured to be severed by the piston upon detonation of the first pyrotechnic ignitor or upon detonation of the second pyrotechnic ignitor.

2. The fuse module of claim 1, further comprising a positive temperature coefficient element (60) connected to the busbar electrically in parallel with the fuse element, preferably wherein the positive temperature coefficient element has, within a normal operating temperature range, a resistance that is greater than a resistance of the fuse element.

3. The fuse module of any of the preceding claims, wherein the controller is adapted to send an initiation signal to the first pyrotechnic ignitor upon occurrence of a predefined event.

4. The fuse module of any of the preceding claims, wherein the piston is formed of an electrically insulating material.

5. The fuse module of any of the preceding claims, wherein the first pyrotechnic ignitor and the second pyrotechnic ignitor are disposed in a side-by-side relationship within the shaft.

## Patentansprüche

1. Sicherungsmodul (10), das Folgendes umfasst:
eine elektrisch isolierende Basis (12);
eine Sammelschiene (14), die auf einer oberen Fläche der Basis angeordnet ist und ein Schmelzelement (22) sowie einen ersten und einen zweiten Anschlussabschnitt (26a, 26b) umfasst, die sich von gegenüberliegenden Enden des Schmelzelements aus erstrecken, wobei sich das Schmelzelement über einen in der oberen Fläche der Basis gebildeten Hohlraum (20) erstreckt;
einen pyrotechnischen Unterbrecher (PI), der auf der Basis angeordnet ist, wobei der PI Folgendes umfasst:
einen Kolben (42), der in einem Schacht (43) oberhalb des Schmelzelements angeordnet ist;
einen ersten pyrotechnischen Zünder (44a), der mit einer Steuerung (45) gekoppelt ist, wobei der erste pyrotechnische Zünder so ausgelegt ist, dass er detoniert und den Kolben durch das Schmelzelement drückt beim Empfang eines Auslösesignals von der Steuerung; und
einen zweiten pyrotechnischen Zünder (44b), der über ein Paar Leitungen (52a, 52b) mit der Sammelschiene gekoppelt ist, wobei der zweite pyrotechnische Zünder so ausgelegt ist, dass er bei einem Anstieg der Spannung an den Leitungen detoniert und den Kolben durch das Schmelzelement drückt, wobei sich die Leitungen durch den Schaft und über einen Weg des Kolbens erstrecken und so ausgelegt sind, dass sie bei der Detonation des ersten pyrotechnischen Zünders oder bei der Detonation des zweiten pyrotechnischen Zünders durch den Kolben durchtrennt werden.

2. Sicherungsmodul nach Anspruch 1, das ferner ein Element (60) mit positivem Temperaturkoeffizienten umfasst, das elektrisch parallel zu dem Schmelzelement mit der Sammelschiene verbunden ist, wobei das Element mit positivem Temperaturkoeffizienten innerhalb eines normalen Betriebstemperaturbereichs einen Widerstand aufweist, der größer ist als ein Widerstand des Schmelzelements.

3. Sicherungsmodul nach einem der vorhergehenden Ansprüche, wobei die Steuerung so eingerichtet ist, dass sie bei Auftreten eines vordefinierten Ereignisses ein Auslösesignal an den ersten pyrotechnischen Zünder sendet.

4. Sicherungsmodul nach einem der vorhergehenden Ansprüche, wobei der Kolben aus einem elektrisch isolierenden Material gebildet ist.

5. Sicherungsmodul nach einem der vorhergehenden Ansprüche, wobei der erste pyrotechnische Zünder und der zweite pyrotechnische Zünder nebeneinander in dem Schaft angeordnet sind.

## Revendications

1. Module fusible (10) comprenant :
une base électriquement isolante (12),
une barre omnibus (14) disposée sur une surface supérieure de la base et comprenant un élément fusible (22) et des première et deuxième parties de borne (26a, 26b) s'étendant depuis les extrémités opposées de l'élément fusible, l'élément fusible s'étendant au-dessus d'une cavité (20) formée dans la surface supérieure de la base,
un interrupteur pyrotechnique (IP) disposé sur la base, l'IP comprenant :
un piston (42) disposé à l'intérieur d'un puits (43) au-dessus de l'élément fusible,
un premier allumeur pyrotechnique (44a) couplé à un contrôleur (45), le premier allumeur pyrotechnique étant conçu pour détoner et forcer le piston à travers l'élément fusible à la réception d'un signal d'amorçage en provenance du contrôleur, et
un deuxième allumeur pyrotechnique (44b) couplé à la barre omnibus par une paire de conducteurs (52a, 52b), le deuxième allumeur pyrotechnique étant conçu pour détoner et forcer le piston à travers l'élément fusible lors d'une augmentation de la tension aux bornes des conducteurs, lesdits conducteurs traversant le puits et la trajectoire du piston et étant conçus pour être sectionnés par le piston lors de la détonation du premier allumeur pyrotechnique ou de la détonation du deuxième allumeur pyrotechnique.

2. Module fusible selon la revendication 1, comprenant en outre un élément à coefficient de température positif (60) relié électriquement à la barre omnibus en parallèle avec l'élément fusible, l'élément à coefficient de température positif ayant de préférence, dans une plage de températures de fonctionnement normale, une résistance qui est supérieure à celle de l'élément fusible.

3. Module fusible selon l'une quelconque des revendications précédentes, dans lequel le contrôleur est apte à envoyer un signal d'amorçage au premier allumeur pyrotechnique à l'apparition d'un événement prédéfini.

4. Module fusible selon l'une quelconque des revendications précédentes, dans lequel le piston est réalisé dans un matériau électriquement isolant.

5. Module fusible selon l'une quelconque des revendications précédentes, dans lequel le premier allumeur pyrotechnique et le deuxième allumeur pyrotechnique sont disposés côte à côte à l'intérieur du puits.
